# EUROPEAN PATENT SPECIFICATION

(11) **EP 2 525 671 B1**
(45) Date of publication and mention of the grant of the patent: **14.11.2018**
(21) Application number: 10843798.9
(22) Date of filing: 22.12.2010
(51) Int. Cl.: A23K 10/38, A23K 20/24, A23K 50/10, A23K 50/75, A23K 50/30, A23K 50/40

(54) **FEED SUPPLEMENT AND METHOD**
FUTTERERGÄNZUNGSMITTEL UND VERFAHREN
COMPLÉMENT ALIMENTAIRE POUR ANIMAUX ET PROCÉDÉ ASSOCIÉ

(30) Priority: 20.01.2010 NZ 58274610
(43) Date of publication of application: 28.11.2012
(73) Proprietor: Rich Technology Solutions Limited, Coalgate 7673 (NZ)
(72) Inventor: Coles, Graeme Douglas, Coalgate 7673 (NZ); Pearce, Robert John, Kiama New South Wales 7483 (AU)
(74) Representative: Mitchell, Simon James
(86) International application number: PCT/IB2010/056039
(87) International publication number: WO 2011/089494

(56) References cited:
- WO-A1-03/015532
- WO-A2-2010/106475
- GB-A- 486 163
- US-A- 3 505 073
- US-A- 5 260 089
- US-A- 5 328 707
- US-A- 5 908 634
- US-A1- 2003 049 363
- US-A1- 2006 093 726
- US-A1- 2009 181 126

## Description

### Technical Field

The present invention is a method for manufacturing a feed supplement.

### Background Art

With many animals being reared in areas with natural feed of low or unbalanced quality available it is often necessary to augment diets with additional high quality feed and/or supplements. Many of these supplements/feeds are liquids.

Liquid supplements/feeds often have a high transportation cost due to their water content. This can make them too expensive when compared against similar dry products so this limits their use. In addition, at low temperatures the viscosity of liquid supplements/feeds increases; this means that storage tanks, pumps and valves need to be insulated in colder climates. This can also make liquid supplements/feeds expensive to use.

It is known in animal nutrition, especially for intensively reared monogastrics, to use mixtures of organic acids to lower the pH of the digesta. This lowering of the pH has been found to reduce or eliminate the need for antibiotics as prophylactics against gut pathogens. These mixtures are formulated from pure precursors which are expensive, thus limiting their use commercially.

There is an increasing use of ethanol by-products as feed or feed supplements, generally in the form of Distillers Dried Grains (DDG) or Distillers Dried Grain and Solubles (DDGS). To produce each of these by-products the material remaining after the distillation process (Whole Stillage) is centrifuged to produce crude solids and thin stillage. Thin stillage is an aqueous suspension of yeast components, soluble non-fermentation products and fermentation by-products.

The thin stillage is evaporated to form Condensed Distillers Solubles (CDS), CDS is sometimes called 'Distillers Syrup', 'Distillers Concentrated Syrup' or 'Condensed Distillers Solubles' sometimes shortened to DCS. For consistency we will use Condensed Distillers Syrup or CDS. The CDS is sold separately or combined with the coarse solids (sometimes referred to as crude solids) to form Wet Distillers Grains and Solubles (WDGS). The WDGS is dried to form DDGS. If the coarse solids are dried without the CDS being added the product is DDG.

The CDS is high in organic acids (mainly lactic acid), unfermented carbohydrates and yeast breakdown products (including protein and polar lipids). This makes it useful as a supplement/feed and it has to a limited extent been used as a feed supplement for low quality forage diets. Some of the problems associated with CDS which limit the use of CDS as a supplement/feed on its own include susceptibility to bacterial fermentation, separation in storage tanks and the increase in viscosity at low temperatures. These problems can be overcome by quick delivery to the end user, incorporating some form of mixing device in the storage tank and insulating the feed delivery system (storage tank, pumps and lines), but this comes at a cost. A second, less tractable problem is that CDS cannot be dehydrated to a solid this creates handling and dosage control challenges. For these reasons and others most of the CDS is combined to form WDGS, then dried to form DDGS.

Various feed preparation processes are described in the prior art e.g. US 5260089, US 2006/0093726, US 2009/0181126, US5908634, US5328707, US 2003/049363, GB 486163, WO 03/015532 and US 3505073. However, each of these relate to a process utilising components with lower water contents and/or resulting in higher pH than the present invention.

Any discussion of the prior art throughout the specification is not an admission that such prior art is widely known or forms part of the common general knowledge in the field.

It would be advantageous if the present invention could overcome one or more of the problems mentioned earlier.

### Disclosure of Invention

The present invention provides a process for preparing at least one animal feed supplement from a reaction product of one or more distillation by-product which includes the following steps in order:
A prepare the or each distillation by-product for processing, wherein the or each distillation by-product is selected from thin stillage and condensed distillers solubles (CDS);
B react the prepared distillation by-product with one or more cation source to form at least one reaction product where at least one cation in said cation source is not monovalent;
wherein step A includes determining the water content of the or each prepared distillation by-product and adjusting the water content to between 40% and 75% ready for step B,
wherein said prepared distillation by-product includes at least one organic acid which is reacted in step B, and wherein the concentration of one or more organic acids in the distillation by-product in step A is used to determine a maximum amount of cation source reacted with the at least one organic acid in step B, such that the or each cation is independently chosen from the group consisting of Mg, Ca, Fe, Cu, Co, Mn, Zn and Mo.

Preferably the or each cation source contains one or more cation.
In a highly preferred form the thin stillage is evaporated to about 60% water content in step A. Preferably the evaporated thin stillage is not cooled before step B.

In a highly preferred form the or each cation is capable of forming one or more complex or chelate with at least one of the constituents in the distillation by-product. In a preferred form the constituent is a reactive organic acid. Preferably the reactive organic acid is lactic or acetic acid.

Preferably, in one form, essentially all of the organic acids present are reacted in step B.

Preferably Step A is determining the organic acid content of the or each distillation by-product and/or adjusting the organic acid content to the required level.

In a highly preferred form the or each cation is added as a carbonate, oxide, bicarbonate, hydroxide, chloride, sulphate, nitrate or phosphate.

In a preferred form the cation source is a natural mineral such as dolomite, limestone or magnesite. In a further preferred form the cation source is milled to a powder before addition to the prepared distillation by-product.

It is preferred that the vessel in which the reaction occurs allows any resultant gases to be removed. Preferably the reaction in step B occurs with minimal loss of heat from the reaction vessel.

Preferably, if the reaction vessel used does not allow degassing an additional step D is carried out to degas the reaction product before drying.

Preferably the reaction product from step B is a paste that is transferred to a drying device for step C with minimal heat loss.

Preferably the dried reaction product from step C is in the form of a powder.

Preferably the drying device used for step C is a cyclonic drying mill. Preferably if the drying is carried out in a drying device that does not reduce the dried reaction product's particle size, an additional step E is carried out to reduce the particle size to the desired range.

Preferably, the reaction products of desired particle size are then pelletised. An animal feed supplement produced by the above method is also described. Preferably the reaction product can be separated into one or more independent animal feed supplements.

### Brief Description of Drawings

By way of example only, a preferred embodiment of the present invention is described in detail below with reference to the accompanying drawings, in which:

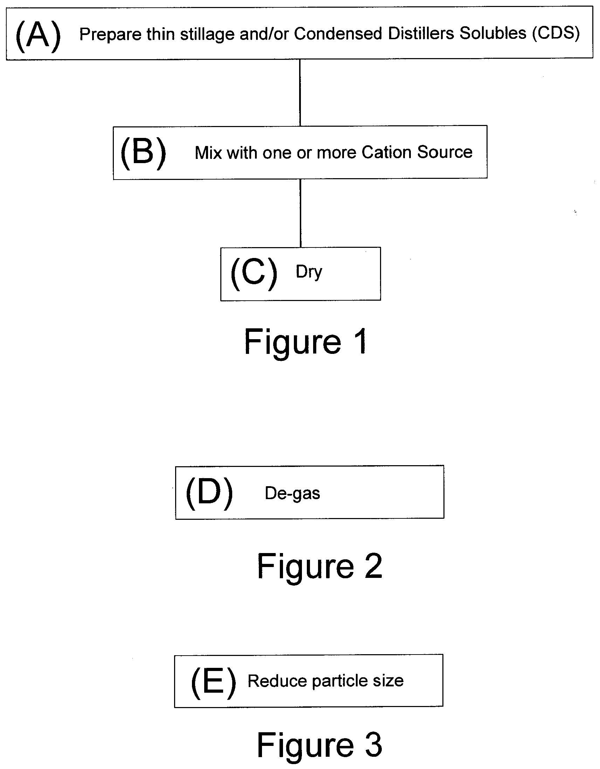

- Figure 1: is a flowchart of the key steps in the process;
- Figure 2: is a flowchart showing an optional process step;
- Figure 3: is a flowchart showing an optional process step.

### Best Mode for Carrying Out the Invention

Referring to the drawings a process for preparing an animal feed supplement is shown which includes the following steps in order:
A. Prepare thin Stillage and/or Condensed Distillers Solubles (CDS);
B. Mix the thin stillage and/or CDS with one or more Cation Source;
C. Drying.

In step A Thin Stillage and/or Condensed Distillers Solubles (CDS) are prepared for the next step in the process. If thin stillage is used then this step can include an evaporation step to reduce the water content to a suitable level. Once the thin stillage and/or CDS is in a suitable form then the concentration of one or more of the reactive organic acids present is determined. Part of the preparation process may include storing the thin stillage and/or Condensed Distillers Solubles (CDS) in this form for a time then re-determining the concentration of one or more of the reactive organic acids present as it has been found the lactic acid and acetic acid concentrations generally increase with storage. It should be noted that the term '*reactive organic acid*' is intended to cover lactic acid, acetic acid and other organic acids that form complexes or chelates with cations.

The reactive organic acid concentration is used to determine the maximum amount of cation source required in step B. It is not necessary for all the reactive acid to be slaked by cation. In many applications, it will be desirable to leave a proportion of reactive organic acid to better provide for digesta pH reduction. It should be noted that the sodium:potassium ratio in thin stillage and/or CDS is appropriate for animal nutrition so no adjustments to this are normally needed, but additional material may be added at this stage to optimise the final product for a specific use.

The reactive organic acid of most interest at present is lactic acid, as it is well known that lactic acid forms complexes or chelates with cations capable of entering an oxidation state of II or higher. These lactic acid/lactate complexes or chelates, where the cation is Mg, Ca, Fe, Cu, Co, Mn, Zn or Mo, are known to make these cations far more bioavailable than inorganic salts of the same cations. It is believed that this process forms compounds of the mentioned cations in, at least partially, lactic acid/lactate complexes or chelates.

In step B the prepared thin stillage and/or CDS from step A is mixed with the predetermined amount of the cation source. It is envisioned that the cation sources used will be natural minerals such as limestone, dolomite, magnesite for example. However, oxides, carbonates, hydroxides, chlorides, sulphates, nitrates, etc, of natural or artificial origin, of the cations could also be used as a cation source. If natural minerals are used they need to be of sufficiently high quality to minimise any contamination of the final product.

The cation source needs to be in a form that will react with the prepared thin stillage and/or CDS from step A. For example a fine powder or sand may be used. Alternatively the cation source may be dissolved in liquid (water for example) and added to the prepared Thin Stillage and/or CDS. The processing continues until the reaction is as complete as required. The cessation of gas evolution or a specific pH of the reaction mixture can be used to determine the reaction endpoint required.

If the reaction in step B involves gas production e.g. from a carbonate, then the vessel used for the processing needs to be designed to allow the resultant foam to degas. Alternatively an additional degassing step D can be carried out on the resulting product before step C.

If the cation is Calcium then the reaction with the lactic acid present is exothermic, and it forms a hydrated precipitate (Ca²⁺ (CH₃CHOCOOH)⁻₂≈5H₂O). This exothermic reaction and precipitate formation reduces the amount of energy needed for step C.

In step C the product is dried by known means, e.g. dry air, microwave, cyclonic drying, oven drying, etc. The heat from the exothermic reactions and the binding of the water of hydration into precipitates, complexes and chelates significantly reduces the amount of energy used for drying. The drying can be carried out by any known means, cyclone, fluid bed, microwave, infra-red, etc or a combination of these.

Optionally, as shown in step E, the dried material is milled to form a finely divided powder for packaging and distribution. This step may not be necessary if the product from step C is in the form desired. Alternatively, the dried material may be pelletised for ease of transport in subsequent processing. This material provides minerals, trace elements, protein, lipids, digestible polysaccharides, fibre and/or a product useful for reducing the animals digesta pH.

In further embodiments micro-nutrients can be added at any stage to specifically treat an identified deficiency symptom in target animals.

In a further embodiment the reaction product produced in step B is not dried but directly used as a paste. This paste could be diluted to form a liquid or mixed with dry materials to form an alternative feed or feed supplement.

In any embodiment the cation source may contain more than one cation, and be in one or more form. In fact if the cation source is a natural product such as dolomite this is almost certain to be the case.

In one embodiment the dried material is separated into one or more separate feed supplement prior to milling or pelletising (for example) for shipment as independent products.

For some embodiments of the process step B may be repeated with a number of different cation sources prior to step C being undertaken.

In further embodiments, where step B involves gas production e.g. from a carbonate, then the drying equipment is designed or operated to allow the removal of any gaseous reaction products.

It should be noted that although the specific embodiment and examples concentrate on grain ethanol distillation by-products, ethanol distillation from grapes or other sources is also envisaged. The by-product need only have a sufficient organic acid content to allow the formation of a reaction product which can be dried.

### Specific Examples:

### Example 1

Thin stillage from ethanol production is concentrated by evaporation until the water content is about 60%, i.e. the thin stillage is processed to form Condensed Distillers Solubles. The content of lactic and acetic acid is determined, and the required amount of limestone, dolomite and/or magnesite is added to the hot/warm evaporated thin stillage. The following reactions are believed to occur:

βCO₃ + 2CH₃CHCOHCOOH +4H₂O → (CH₃CHOHCOO)₂β.5H₂O +CO₂

and

βCO₃ + 2CH₃COOH +(x-1)H₂O → (CH₃CHOHCOO)₂β.xH2O +CO₂

where β is Calcium or Magnesium

These reactions are allowed to go through to completion in a vessel designed to allow the CO₂ released to escape without excessive foaming. The reactions are exothermic, and the residual evaporation heat is retained as much as possible as the resultant paste product is transferred to a cyclonic drying mill. The paste is dried to a moisture content of less than 10% and a particle size of less than 100µm. The drying is carried out at a temperature sufficiently low as to minimise or prevent protein cross-linking and browning. The actual drying temperature is determined by experiment but is not likely to exceed much more than about 80°C. Brief exposure to high temperatures may be necessary to reduce pathogen loading of the final product but this is not part of the drying process.

### Example 2

The process in example 1 is carried out using a magnesium mineral source to create a product used as a supplement for dairy cattle, at a dose rate of 10g/cow/day of digestible magnesium.

### Example 3

Dolomite is used in the process described in example 1 to produce a product used to reduce the duodenal digesta pH in pigs by 0.5.

### Example 4

A calcium-rich product is used to provide an accessible calcium source for poultry to maintain bone reserves during lay. A proportion of the cation reactant is supplied as the phosphate so as to ensure the calcium:phosphorus ratio of the final product is appropriate. The dose rate is determined by the potassium:sodium ratio in the product.

### Example 5.

Five kilograms of Condensed Distillers Syrup (CDS) was obtained from a commercial production source. The water content of the CDS was determined by drying a 10 ml sample to constant weight in an oven at 105°C. The water content of the CDS was found to be 60%. At constant weight the dried CDS became a sticky, rubbery mass.

The CDS (from the manufacturer's analysis) included 27% lactic acid, and 3% acetic acid. The lactic acid and acetic acid figures were used to determine the amount of magnesium carbonate required to react with the quantity of organic acids present. This was determined to be 505g of Magnesium Carbonate (MgCO₃). The 5 litres of DCS was heated to 75°C and the 505g of Magnesium Carbonate was weighed out and then slowly added to the DCS with vigorous stirring. During addition of MgCO₃, gas evolution was observed as expected, and the pH of the DCS/ MgCO₃ mixture rose steadily from 4.1 to 7. As the last of the quantity of MgCO₃ calculated to be needed for complete reaction was added, the rate of pH increase slowed, as did gas evolution.

The resultant reaction mixture was cooled to room temperature, and a sample was taken for water content determination. The remaining reaction mixture was then spread onto metal trays and frozen, before freeze-drying.

The water content of the reaction mixture was determined to be 50%, as expected from the addition of solid MgCO₃, and the known acquisition of water of hydration by magnesium lactate and magnesium acetate.

Once the bulk of the reaction mixture was fully freeze-dried, it was easily crumbled to a dry, readily-flowing powder. Much easier to handle than the sticky, rubbery mass obtained from simply drying the CDS.

A similar process was carried using CaCO₃, and apart from a slight fall in reaction mixture water content, consistent with the increased atomic weight of Ca compared with Mg, similar results were obtained.

### Example 6.

One cubic meter of CDS was obtained from the manufacturer. The analysis was similar to the CDS used for Example 5.

Seventy five litres of CDS was placed in a jacketed, stirred Cleveland kettle and heated to 75°C. As in Example 5 the quantity of MgCO₃ required was estimated from the content of organic acids claimed by the manufacturer, and found to be 7.6kg. This quantity was added and found to cause the pH to rise from 4.1 to 7.0 as expected. Stirring continued until all the gas evolved was released from the very viscous liquid. It was clear that on this larger scale, pH was a more reliable indicator than gas evolution that reaction had ceased.

A sample of reaction mixture was tested for water content, and this was found to be 51.3%.

A one-litre sample of the reaction mixture was taken for drying using a small-scale cyclone drying mill. To avoid nozzle blockages, the product was diluted to a final water content of 80% prior to drying. A small quantity of dry, flowable finely divided powder was obtained.

### Nutritional Analysis - DCS and Mg products produced in Example 5 and/or 6

*In vitro* nutritional analysis comparing DCS and the dried magnesium reaction product determined that the protein content and *in vitro* ME values declined by no more than would be expected from the additional magnesium content. This was a surprising result.

### Palatability of Reaction Products from Example 5 and/or 6

### Background:

Magnesium supplements generally suffer from a lack of palatability, as magnesium salts are bitter, and MgO, which is often applied to pasture or forage supplements as a finely divided dust, is known to reduce feed acceptability.

To determine if the magnesium reaction product had the same palatability problem samples were evaluated for palatability in several companion and production species.

In all cases, the product tested was prepared as described in example 5 above.

*Domestic short-haired cats:* Two well-fed domestic pet cats, one a young neutered male, the other an older neutered female, were offered 5g of the dried Mg reaction product alongside a normal-sized meal of fresh fish at room temperature. The young male consumed the dried Mg reaction product with avidity prior to eating the fish. The older female, whose appetite is normally relatively limited, consumed the dried Mg reaction product and the fish concurrently and completely. Both animals now view a small quantity of dried Mg reaction product as a treat to be sought regularly.

*Dogs:* A neutered female Jack Russell terrier regularly consumes 10g portions of toasted bread with butter and yeast extract, but will not readily eat toasted bread by itself. Toasted bread was spread with a mixture of 50% dried Mg reaction product with cold water and offered to this dog. A total of 50g of toasted bread with 25g of dried Mg reaction product solids was prepared and offered in portions of approximately 10g. All were consumed with avidity.

*Breeder hens:* A small flock (5 hens and one cockerel) was offered a meal of 250g of layer mash mixed with 50 g of dried Mg reaction product. All the mixture was immediately consumed with no apparent problems.

In addition, small samples have been offered to goats, calves, and lambs, all of which immediately consumed the product. So surprisingly the magnesium addition does not appear to have affected the palatability or nutritional value of the CDS.

## Claims

1. A process for preparing at least one animal feed supplement from a reaction product of one or more distillation by-product which includes the following steps in order:
A prepare the or each distillation by-product for processing, wherein the or each distillation by-product is selected from thin stillage and condensed distillers solubles (CDS);
B react the prepared distillation by-product with one or more cation source to form at least one reaction product where at least one cation in said cation source is not monovalent;
wherein step A includes determining the water content of the or each prepared distillation by-product and adjusting the water content to between 40% and 75% ready for step B,
wherein said prepared distillation by-product includes at least one organic acid which is reacted in step B, and wherein the concentration of one or more organic acids in the distillation by-product in step A is used to determine a maximum amount of cation source reacted with the at least one organic acid in step B, such that the or each cation is independently chosen from the group consisting of Mg, Ca, Fe, Cu, Co, Mn, Zn and Mo.

2. The process as claimed in claim 1 **characterised in that** said process includes a step C that follows step B where step C is: C Dry one or more reaction product;

3. The process as claimed in claim 1 or 2 **characterised in that** the organic acid is lactic or acetic acid.

4. The process as claimed in any one of the preceding claims **characterised in that** the or each cation source contains more than one cation.

5. The process as claimed in any one of the preceding claims **characterised in that** the or each cation is capable of forming one or more complex or chelate with at least one of the constituents in at least one distillation by-product.

6. The process as claimed in any one of the preceding claims **characterised in that** essentially all of the organic acid(s) present are reacted in step B.

7. The process as claimed in any one of the preceding claims **characterised in that** the thin stillage is evaporated to 50% to 60% water content in step A.

8. The process as claimed in claim 7 **characterised in that** the evaporated thin stillage is not cooled before step B.

9. The process as claimed in any one of the preceding claims **characterised in that** the or each cation is added as a carbonate, oxide, bicarbonate, hydroxide, chloride, sulphate, nitrate or phosphate.

10. The process as claimed in any one of the preceding claims **characterised in that** the cation source is a natural mineral such as dolomite, limestone or magnesite.

11. The process as claimed in any one of the preceding claims **characterised in that** the cation source is milled to a powder before addition to the prepared distillation by-product in step B.

12. The process as claimed in any one of the preceding claims **characterised in that** the process is carried out in a vessel, in which the reaction occurs, which allows any resultant gases to be removed.

13. The process as claimed in any one of claims 2 to 11 **characterised in that** the process is carried out in a vessel which does not allow degassing, wherein prior to step C a step D is carried out, such that step D is carried out to degas the reaction product after step B.

14. The process as claimed in claim 12 or claim 13 **characterised in that** the reaction in step B occurs with minimal loss of heat from the reaction vessel.

15. The process as claimed in any one of claims 2 to 14 **characterised in that** the reaction product from step B is a paste that is transferred to a drying device for step C with minimal heat loss.

16. The process as claimed in any one of claims 2 to 15 **characterised in that** the dried reaction product from step C is in the form of a powder.

17. The process as claimed in claim 15 **characterised in that** the drying device used for step C is a cyclonic drying mill.

18. The process as claimed in any one of claims 2 to 17 **characterised in that** if the drying is carried out in a drying device that does not reduce the dried reaction product's particle size to a desired range, an additional step E is carried out to reduce the particle size to the desired range.

19. The process as claimed in claim 18 **characterised in that** the reaction products of desired range are then pelletised.

20. The process as claimed in any one of the preceding claims **characterised in that** the reaction product can be separated into one or more independent animal feed supplements.

## Patentansprüche

1. Verfahren zur Herstellung von mindestens einem Tierfutterergänzungsmittel aus einem Reaktionsprodukt von einem oder mehr Destillationsnebenprodukt(en), das reihenfolglich die folgenden Schritte einschließt:
A Herstellen von dem oder jedem Destillationsnebenprodukt zur Verarbeitung, wobei das oder jedes Destillationsnebenprodukt aus einer Dünnschlempe und Condensed Distillers Solubles (CDS; einem flüssigen Proteinfuttermittel) ausgewählt ist;
B zur Reaktion bringen des hergestellten Destillationsnebenprodukts mit einer oder mehr Kationenquelle(n) zum Bilden von mindestens einem Reaktionsprodukt, wobei mindestens ein Kation in der Kationenquelle nicht einwertig ist;
wobei Schritt A die Bestimmung des Wassergehalts von dem oder jedem hergestellten Destillationsnebenprodukt und Einstellen des Wassergehalts auf zwischen 40 % und 75 %, bereit für Schritt B einschließt,
wobei das hergestellte Destillationsnebenprodukt mindestens eine organische Säure einschließt, die in Schritt B zur Reaktion gebracht wird, und wobei die Konzentration der einen oder mehr organischen Säure(n) in dem Destillationsnebenprodukt in Schritt A zur Bestimmung einer maximalen Menge der mit der mindestens einen organischen Säure in Schritt B zur Reaktion gebrachten Kationenquelle derart verwendet wird, dass das oder jedes Kation unabhängig aus der Gruppe ausgewählt ist, bestehend aus Mg, Ca, Fe, Cu, Co, Mn, Zn und Mo.

2. Verfahren nach Anspruch 1, **dadurch gekennzeichnet, dass** das Verfahren einen dem Schritt B folgenden Schritt C einschließt, wobei Schritt C Folgendes beinhaltet: C - Trocknen von einem oder mehr Reaktionsprodukt(en).

3. Verfahren nach Anspruch 1 oder 2, **dadurch gekennzeichnet, dass** die organische Säure Milch- oder Essigsäure ist.

4. Verfahren nach einem der vorangehenden Ansprüche, **dadurch gekennzeichnet, dass** die oder jede Kationenquelle mehr als ein Kation enthält.

5. Verfahren nach einem der vorangehenden Ansprüche, **dadurch gekennzeichnet, dass** das oder jedes Kation zum Bilden von einem oder mehr Komplex(en) oder Chelat(en) mit mindestens einem der Bestandteile in mindestens einem Destillationsnebenprodukt fähig ist.

6. Verfahren nach einem der vorangehenden Ansprüche, **dadurch gekennzeichnet, dass** im Wesentlichen die gesamte(n) der vorliegenden organischen Säure(n) in Schritt B zur Reaktion gebracht wird/werden.

7. Verfahren nach einem der vorangehenden Ansprüche, **dadurch gekennzeichnet, dass** die Dünnschlempe in Schritt A auf einen Wassergehalt von 50 % bis 60 % verdampft wird.

8. Verfahren nach Anspruch 7, **dadurch gekennzeichnet, dass** die verdampfte Dünnschlempe vor Schritt B nicht abgekühlt wird.

9. Verfahren nach einem der vorangehenden Ansprüche, **dadurch gekennzeichnet, dass** das oder jedes Kation als ein Carbonat, Oxid, Bicarbonat, Hydroxid, Chlorid, Sulfat, Nitrat oder Phosphat zugefügt wird.

10. Verfahren nach einem der vorangehenden Ansprüche, **dadurch gekennzeichnet, dass** die Kationenquelle ein Naturmineral, wie zum Beispiel Dolomit, Kalkstein oder Magnesit ist.

11. Verfahren nach einem der vorangehenden Ansprüche, **dadurch gekennzeichnet, dass** die Kationenquelle vor dem Zufügen zu dem hergestellten Destillationsnebenprodukt in Schritt B in ein Pulver zermahlen wird.

12. Verfahren nach einem der vorangehenden Ansprüche, **dadurch gekennzeichnet, dass** das Verfahren in einem Behältnis durchgeführt wird, in dem die Reaktion auftritt, das die Entfernung jedweder entstehenden Gase zulässt.

13. Verfahren nach einem der Ansprüche 2 bis 11, **dadurch gekennzeichnet, dass** das Verfahren in einem Behältnis durchgeführt wird, das eine Entgasung nicht zulässt, wobei vor Schritt C ein Schritt D derart durchgeführt wird, dass Schritt D zum Entgasen des Reaktionsprodukts nach Schritt B durchgeführt wird.

14. Verfahren nach Anspruch 12 oder Anspruch 13, **dadurch gekennzeichnet, dass** die Reaktion in Schritt B mit einem minimalen Wärmeverlust aus dem Reaktionsbehältnis auftritt.

15. Verfahren nach einem der Ansprüche 2 bis 14, **dadurch gekennzeichnet, dass** das Reaktionsprodukt aus Schritt B eine Paste ist, die in eine Trocknungsvorrichtung für Schritt C mit minimalem Wärmeverlust befördert wird.

16. Verfahren nach einem der Ansprüche 2 bis 15, **dadurch gekennzeichnet, dass** das getrocknete Reaktionsprodukt von Schritt C in der Form eines Pulvers vorliegt.

17. Verfahren nach Anspruch 15, **dadurch gekennzeichnet, dass** die für Schritt C verwendete Trocknungsvorrichtung eine Zyklon-Trocknungsmühle ist.

18. Verfahren nach einem der Ansprüche 2 bis 17, **dadurch gekennzeichnet, dass** bei Durchführung der Trocknung in einer Trocknungsvorrichtung, welche die Partikelgröße des getrockneten Reaktionsprodukts nicht auf den gewünschten Bereich reduziert, ein zusätzlicher Schritt E zur Reduktion der Partikelgröße auf den gewünschten Bereich durchgeführt wird.

19. Verfahren nach Anspruch 18, **dadurch gekennzeichnet, dass** die Reaktionsprodukte des gewünschten Bereichs dann pelletisiert werden.

20. Verfahren nach einem der vorangehenden Ansprüche, **dadurch gekennzeichnet, dass** das Reaktionsprodukt in ein oder mehr unabhängige(s) Tierfutterergänzungsmittel aufgetrennt werden kann.

## Revendications

1. Procédé pour la préparation d'au moins un complément alimentaire pour animaux à partir d'un produit réactionnel d'un ou plusieurs sous-produits de distillation qui comprend les étapes suivantes dans l'ordre :
A préparer le sous-produit de distillation ou chaque sous-produit de distillation pour traitement, le sous-produit de distillation ou chaque sous-produit de distillation étant choisi entre du résidu de distillation dilué et des solubles de distillerie condensés (CDS) ;
B faire réagir le sous-produit de distillation préparé avec une ou plusieurs sources de cations pour former au moins un produit réactionnel, au moins un cation dans ladite source de cations n'étant pas monovalent ;
dans lequel l'étape A comprend la détermination de la teneur en eau du sous-produit de distillation préparé ou de chaque sous-produit de distillation préparé et l'ajustement de la teneur en eau à une teneur entre 40 % et 75 % prête pour l'étape B,
dans lequel ledit sous-produit de distillation préparé comprend au moins un acide organique qui est amené à réagir dans l'étape B et dans lequel la concentration du ou des acides organiques dans le sous-produit de distillation dans l'étape A est utilisée pour déterminer une quantité maximale de source de cations amenée à réagir avec l'au moins un acide organique dans l'étape B, le cation ou chaque cation étant indépendamment choisi dans le groupe constitué par Mg, Ca, Fe, Cu, Co, Mn, Zn et Mo.

2. Procédé tel que revendiqué dans la revendication 1 **caractérisé en ce que** ledit procédé comprend une étape C qui suit l'étape B, l'étape C étant :
C sécher un ou plusieurs produits réactionnels.

3. Procédé tel que revendiqué dans la revendication 1 ou 2 **caractérisé en ce que** l'acide organique est l'acide lactique ou acétique.

4. Procédé tel que revendiqué dans l'une quelconque des revendications précédentes **caractérisé en ce que** la source de cations ou chaque source de cations contient plus d'un cation.

5. Procédé tel que revendiqué dans l'une quelconque des revendications précédentes **caractérisé en ce que** le cation ou chaque cation est capable de former un ou plusieurs complexes ou chélates avec au moins l'un des constituants dans l'au moins un sous-produit de distillation.

6. Procédé tel que revendiqué dans l'une quelconque des revendications précédentes **caractérisé en ce qu'**essentiellement la totalité du ou des acides organiques présents sont amenés à réagir dans l'étape B.

7. Procédé tel que revendiqué dans l'une quelconque des revendications précédentes **caractérisé en ce que** le résidu de distillation dilué est évaporé à une teneur en eau de 50 % à 60 % dans l'étape A.

8. Procédé tel que revendiqué dans la revendication 7 **caractérisé en ce que** le résidu de distillation dilué évaporé n'est pas refroidi avant l'étape B.

9. Procédé tel que revendiqué dans l'une quelconque des revendications précédentes **caractérisé en ce que** le cation ou chaque cation est ajouté sous forme d'un carbonate, oxyde, bicarbonate, hydroxyde, chlorure, sulfate, nitrate ou phosphate.

10. Procédé tel que revendiqué dans l'une quelconque des revendications précédentes **caractérisé en ce que** la source de cations est un minéral naturel tel que la dolomite, le calcaire ou la magnésite.

11. Procédé tel que revendiqué dans l'une quelconque des revendications précédentes **caractérisé en ce que** la source de cations est broyée en une poudre avant ajout dans l'étape B au sous-produit de distillation préparé.

12. Procédé tel que revendiqué dans l'une quelconque des revendications précédentes **caractérisé en ce que** le procédé est effectué dans une cuve, dans laquelle la réaction a lieu, qui permet à de quelconques gaz résultants d'être évacués.

13. Procédé tel que revendiqué dans l'une quelconque des revendications 2 à 11 **caractérisé en ce que** le procédé est effectué dans une cuve qui ne permet pas de dégazage, dans lequel avant l'étape C une étape D est effectuée, l'étape D étant effectuée pour dégazer le produit réactionnel après l'étape B.

14. Procédé tel que revendiqué dans la revendication 12 ou la revendication 13 **caractérisé en ce que** la réaction dans l'étape B a lieu avec une perte minimale de chaleur du réacteur.

15. Procédé tel que revendiqué dans l'une quelconque des revendications 2 à 14 **caractérisé en ce que** le produit réactionnel provenant de l'étape B est une pâte qui est transférée vers un dispositif de séchage pour l'étape C avec une perte minimale de chaleur.

16. Procédé tel que revendiqué dans l'une quelconque des revendications 2 à 15 **caractérisé en ce que** le produit réactionnel séché provenant de l'étape C est sous la forme d'une poudre.

17. Procédé tel que revendiqué dans la revendication 15 **caractérisé en ce que** le dispositif de séchage utilisé pour l'étape C est un broyeur-sécheur cyclonique.

18. Procédé tel que revendiqué dans l'une quelconque des revendications 2 à 17 **caractérisé en ce que** si le séchage est effectué dans un dispositif de séchage qui ne réduit pas la taille des particules du produit réactionnel séché à une plage souhaitée, une étape supplémentaire E est effectuée pour réduire la taille des particules à la plage souhaitée.

19. Procédé tel que revendiqué dans la revendication 18 **caractérisé en ce que** les produits réactionnels de plage souhaitée sont ensuite granulés.

20. Procédé tel que revendiqué dans l'une quelconque des revendications précédentes **caractérisé en ce que** le produit réactionnel peut être séparé en un ou plusieurs compléments alimentaires pour animaux indépendants.
